# EUROPÄISCHE PATENTSCHRIFT

(11) **EP 2 047 130 B1**
(45) Veröffentlichungstag und Bekanntmachung des Hinweises auf die Patenterteilung: **18.12.2013**
(21) Anmeldenummer: 07786189.6
(22) Anmeldetag: 19.07.2007
(51) Int. Cl.: F16C 29/06

(54) **LINEARKUGELLAGER**
LINEAR BALL BEARING
ROULEMENT À BILLES LINÉAIRE

(30) Priorität: 26.07.2006 DE 102006035224
(43) Veröffentlichungstag der Anmeldung: 15.04.2009
(73) Patentinhaber: AB SKF, 415 50 Göteborg (SE)
(72) Erfinder: STAHL, Erwin, 97714 Oerlenbach-Rottershausen (DE); MAYER, Uwe, 97702 Münnerstadt (DE); WHITE, Thomas, 97502 Sömmersdorf (DE); DRÜGEMÖLLER, Andreas, 97456 Dittelbrunn (DE); EDELMANN, Ludwig, 97717 Sulzthal (DE); JESCHKA, Erwin, 97711 Massbach (DE); GRANSOW, Anita, 97526 Sennfeld (DE)
(74) Vertreter: Kohl, Thomas
(86) Internationale Anmeldenummer: PCT/EP2007/006419
(87) Internationale Veröffentlichungsnummer: WO 2008/012024

(56) Entgegenhaltungen:
- EP-A1- 0 558 761
- EP-A1- 0 863 323
- CH-A5- 674 554
- DE-A1- 19 928 775
- US-A- 4 952 075

## Beschreibung

Die Erfindung betrifft ein Linearkugellager.

Beispielsweise aus der gattungsgemäßen US 4,952,075 ist ein Linearkugellager mit endlos umlaufenden Kugeln für ein Längsverschieben einer Welle innerhalb einer Käfighülse bekannt, wobei eine belastete Kugelreihe wenigstens einer der Kugelumläufe auf der einen Seite in einer in die Welle eingearbeiteten Rille und auf der anderen Seite von einer in die Käfighülse eingesetzten Laufbahnplatte geführt ist. Dabei ist sowohl die Laufbahnplatte als auch der rillenartige Bereich der Welle aus einem gehärteten Stahl ausgebildet.

Aus der EP 558 761 A1 ist eine Linearführung bekannt, bei der Oberflächen der Linearführung im lasttragenden Bereich eines Kugelkanals mit einer Härte von wenigstens HRC 35 ausgebildet sind.

Eine Aufgabe der vorliegenden Erfindung ist es, ein Linearkugellager derart zu schaffen, dass das Linearkugellager für zwei zueinander längsverschiebliche, wenigstens gegen ein gegenseitiges Verdrehen gesicherte Teile bei einfacher und damit kostengünstiger Herstellbarkeit hohe Tragzahlen aufweist.

Die Aufgabe wird durch den Gegenstand des Anspruchs 1 gelöst. Vorteilhafte Ausgestaltungen sind in den Unteransprüchen beschrieben.

Die Erfindung beruht dabei auf der Erkenntnis, dass insbesondere gegenüber bekannten Lösungen, bei denen die belasteten Kugeln auf einem Kreiszylindermantel einer gehärteten Welle ohne Rillen abrollen, bei der erfindungsgemäßen Lösung mit Rillen sich die Hertz'schen Pressungsverhältnisse derart zum Positiven hin verändern, dass gegenüber besagten bekannten Lösungen mit gehärteter Welle gleiche oder bessere Tragzahlen erzielbar sind, ohne in vorteilhafter Art und Weise die Welle härten zu müssen. Weiterhin kommt mit Vorteil hinzu, dass die geringere Steifigkeit der ungehärteten Welle die Hertz'schen Pressungsverhältnisse zusätzlich im vorgenannten Sinne positiv zu größeren Tragzahlen hin beeinflusst. Dadurch, dass die Welle mit einer Härte kleiner gleich 54 HRC ausgebildet werden kann, also kein entsprechend hartes Material auszuwählen ist, nicht oberflächenbehandelt, wärmebehandelt und/oder gehärtet werden muss, ist die Welle mit einer Härte kleiner 54 HRC gegenüber härteren Wellen einfacher zu schneiden, zu entgraten, es können Schrauben eingedreht werden und so weiter. Dabei ist die Welle gemäß der Erfindung besonders einfach und damit kostengünstig durch ein Kaltumformen, beispielsweise einem mit einer Materialverdichtung verbundenen Ziehen und/oder insbesondere bei Hohlkörpern durch Kneten herstellbar. Ein einem Härten nachfolgendes aufwendiges Schleifen ist mit Vorteil nicht nötig.

In einer vorteilhaften Ausgestaltung ist insbesondere das Innenteil mit der Rille besagter Härte als eine Hohlwelle ausgebildet. Dadurch ist insbesondere durch die höhlung hindurch mit Vorteil beispielsweise eine Kabeldurchführung möglich, wie auch ein Durchführen von Luft, insbesondere bei pneumatischen Anwendungen.

Das Innen- oder Außenteil mit der Rille besagter Härte kann dabei sowohl aus einem Edelstahl oder einer Nirostahlausführung als auch aus Aluminium ausgebildet sein.

Das erfindungsgemäße Linearkugellager kann dabei mit besonderem Vorteil bei Pneumatik- und/oder Hydraulikanwendungen, insbesondere in, an oder bei Kolbenführungen von Pneumatik- und/oder Hydraulikzylindern, bei medizintechnischen Anwendungen, beispielsweise zur Linearführung bei Injektionsvorrichtungen und/oder bei Textilmaschinen, beispielsweise zur Fadenführung, mit besonderem Vorteil eingesetzt werden. Es kann aber auch in der Automobiltechnik, insbesondere bei Ausbildung als Changierlager zur Lagerung von Schaltgabeln in Getrieben eingesetzt werden.

Weitere Vorteile, Merkmale und Einzelheiten der Erfindung ergeben sich aus dem im Folgenden beschriebenen Ausführungsbeispielen der Erfindung anhand der Figuren. Dabei zeigen:
- Figur 1: einen sektorartigen Ausschnitt eines quergeschnittenen Linearkugellagers mit Kugelumlauf,
- Figur 2: in perspektivischer Ansicht ein Changierlager mit einer Innenhülse mit Zapfen und einer Käfighülse mit darin gehaltenen Kugeln und mit länglichen Ausnehmungen für die Zapfen,
- Figur 3: eine Frontansicht des Changierlagers der Figur 2,
- Figur 4: in perspektivischer Ansicht die Innenhülse ohne die Zapfen und

- Figur 5: in perspektivischer Ansicht die Käfighülse mit den darin gehaltenen Kugeln.

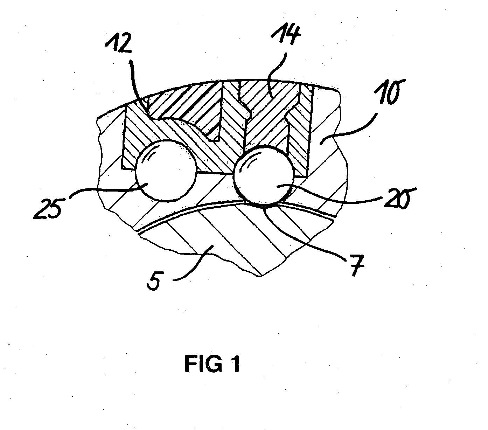

Die Figur 1 zeigt dabei als ein Ausführungsbeispiel der Erfindung einen sektorartigen Ausschnitt eines quergeschnittenen Linearkugellagers. Dabei umfasst das Linearkugellager eine Käfighülse 10, die beispielsweise in einem nicht dargestellten Gehäuse eingesetzt ist und die eine kreiszylindrische Achse 5 umgibt. Dabei kann die Käfighülse 10 aus einem Kunststoff im Spritzgießverfahren hergestellt sein. Am Umfang der Käfighülse 10 verteilt sind dabei mehrere Kugelführungen für jeweils eine endlose Reihe von Kugeln eingearbeitet. Jede der Kugelführungen besteht dabei aus zwei am Umfang nebeneinander angeordneten längsverlaufenden Führungsbahnen, welche an ihren beiden Enden durch jeweils eine halbkreisförmig verlaufende Umlenkbahn miteinander verbunden sind. Der Ausschnitt der Figur 1 zeigt dabei exemplarisch eine der Kugelführungen, wobei der Querschnitt durch die längsverlaufenden Führungsbahnen geführt ist. Dabei gilt das nachfolgend anhand der in der Figur 1 dargestellten Kugelführung Beschriebene entsprechend auch für die weiteren nicht dargestellten Kugelführungen.

In der Käfighülse 10 laufen dabei die belasteten Kugeln 20 der Kugelreihe in einer zur Achse 5 hin offenen Führungsbahn und die unbelasteten Kugeln 25 in einer daneben angeordneten frei von einer Öffnung zur Achse 5 hin ausgebildeten Führungsbahn sowie in den beiden Umlenkbahnen. Die Kugeln 20 und 25 sind beispielsweise aus einem Wälzlagerstahl ausgebildet. Nach außen hin sind die beiden Führungsbahnen durch eine in eine entsprechende Öffnung der Käfighülse 10 eingesetzte Grundplatte 12 begrenzt.

Für die Führungsbahn der belasteten Kugeln 20 ist wiederum in eine entsprechende Öffnung der Grundplatte 12 eine vorzugsweise metallische Laufbahnplatte 14 aus einem gehärteten Stahl eingesetzt. Dabei ist für ein radiales Fixieren der Laufbahnplatte 14 in der Grundplatte 12, die insbesondere aus Kunststoff ausgebildeten ist, die Laufbahnplatte 14 mit an ihren Seitenflächen verlaufenden Ausnehmungen versehen, in welche entsprechende Vorsprünge der Grundplatte 12 eingreifen.

Die in der Kugelführung angeordneten Kugeln 20 und 25 können dabei unmittelbar aneinander anliegend, durch Trennelemente voneinander getrennt und/oder in einer Kette angeordnet sein. Für eine entsprechende Verdrehsicherung der Achse 5 gegenüber der Käfighülse 10 ist entsprechend der Führungsbahn der belasteten Kugeln 20 eine axial verlaufende Rille 7 in die Achse 5 eingearbeitet. Die Achse 5 ist dabei als ein massives Bauteil aus einem ungehärteten Stahl ausgebildet. Insbesondere weist die Achse 5 eine Härte kleiner in etwa 45 HRC auf. In anderen Ausführungsformen kann die Achse 5 auch als ein Hohlkörper ausgebildet sein. Weiterhin ist die Rille 7 in Bezug auf die Kugeln 20 und 25 derart ausgebildet, dass sich beispielsweise eine als Verhältnis von Laufbahnradius durch Kugeldurchmesser ausgedrückte Schmiegung von 0,56 ergibt. Dadurch sowie durch besagte Härte der Achse 5 werden über die eingangs beschriebenen Hertz'schen Pressungsverhältnisse die ebenfalls eingangs beschriebenen Vorteile erzielt.

Ferner ist das Linearkugellager, insbesondere eine Tiefe der Rille 7 derart gering ausgebildet, dass die Achse 5 lediglich gegen ein Verdrehen gesichert ist und das Lager damit nicht als eine klassische, hohe Drehmomenten übertragende Keilwellenanordnung ausgebildet ist, bei der sich die geringe Härte der Achse 5 gegebenenfalls negativ auswirken könnte.

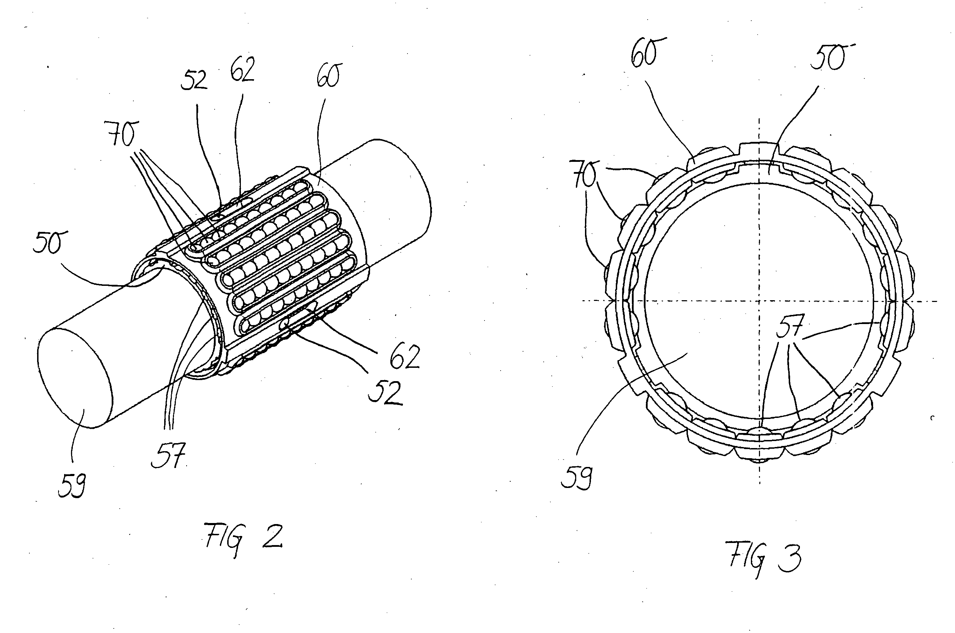

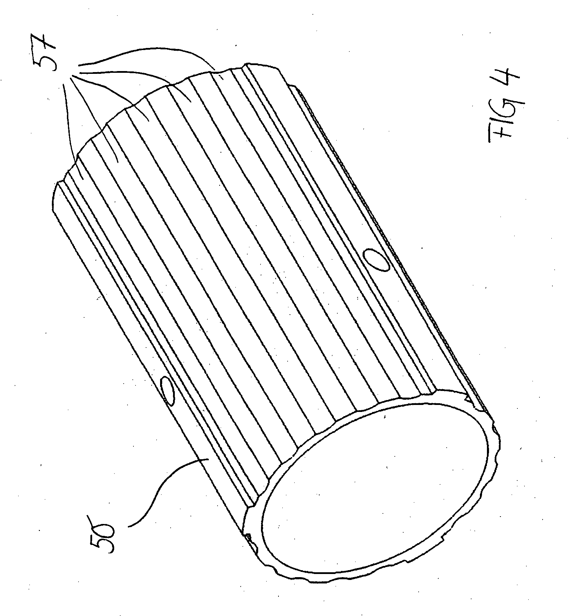

Die Figur 2 zeigt als ein weiteres Ausführungsbeispiel der Erfindung in perspektivischer Ansicht ein Changierlager und die Figur 3 eine Frontansicht des Changierlagers der Figur 2. Dabei umfasst das Changierlager eine auf einer Welle 59 angeordnete Innenhülse 50, deren Außenmantel mehrere sich axial erstreckende Rillen 57 umfasst, in denen die in einer Käfighülse 60 des Changierlagers gehaltenen Kugeln 70 zum Abrollen vorgesehen sind. Weiterhin sind in die Innenhülse 50 an drei Umfangsstellen Zapfen 52 eingepresst. Die Figur 4 zeigt dazu in perspektivischer Ansicht die Innenhülse 50 der Figuren 2 und 3 in Alleinstellung ohne die Zapfen 52.

Die Innenhülse 50 ist beispielsweise als gezogenes oder rundgeknetetes Profil mit einer Härte von 45 HRC hergestellt. Weiterhin sind die Rillen 52 derart ausgebildet, dass sich eine, als Verhältnis vom Rillenradius zu Kugeldurchmesser ausgedrückte Schmiegung von ca. 0,56 ergibt. Durch die vorgenannte Ausbildung der Innenhülse 50 werden somit die zur Lösung der Aufgabe genannten Vorteile erreicht, und damit ein bei herkömmlichen Lösungen labiler Punktkontakt der einzelnen Kugeln 70 hin zu einer Welle beseitigt. Die Welle 59 kann dabei ebenfalls mit Vorteil vergleichsweise weich ausgebildet sein.

Für eine Begrenzung des Längsverschiebens zwischen der Innenhülse 50 und der Käfighülse 60 ragen die Zapfen 52 in axial längliche, in der Käfighülse 60 ausgebildete Ausnehmungen 62 hin. In anderen Ausführungen können dabei natürlich auch anders ausgebildete Mittel zum Begrenzen des Längsverschiebens eingesetzt werden.

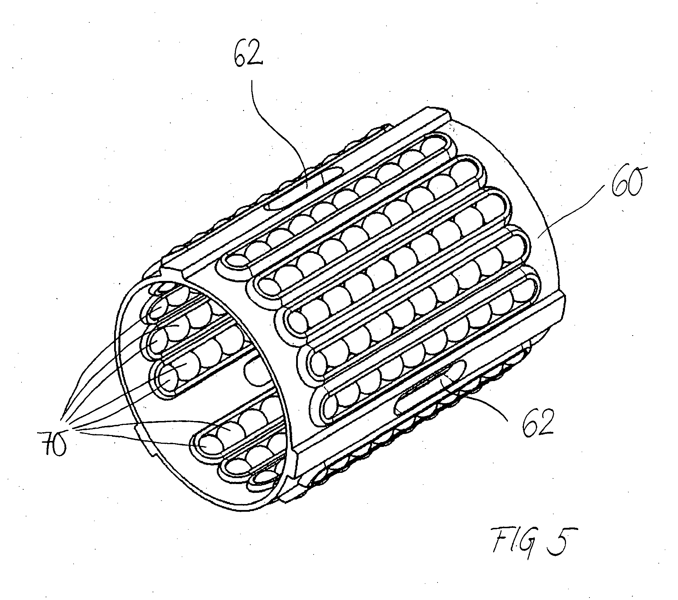

Die Käfighülse 60, in der die Kugeln 70 rollfähig gehalten sind, entspricht dabei einer konventionellen bekannten Ausbildung. Dabei kann je Belastung die Anzahl der Kugeln 70 und/oder Kugelreihen variiert werden. Dabei zeigt die Figur 5 in perspektivischer Ansicht die Käfighülse 60 der Figuren 2 und 3 mit den darin angeordneten Kugeln 70 nochmals in Alleinstellung.

Das vorausgehend beschriebene Changierlager ist dabei insbesondere zur Lagerung von linearbeweglichen Schaltklauen bzw. -gabeln in Getrieben einsetzbar. Dort kann ein einzelnes erfindungsgemäßes Changierlager aufgrund seiner hohen Momentenbelastbarkeit bisherige Lösungen ersetzen, bei denen mit großem Platzbedarf zwei konventionelle Changierlager und/oder eine gehärtete und damit teuere Welle eingesetzt werden müssen. Dabei werden gemäß der Erfindung durch die günstigere Geometrie für den Kugelkontakt, sprich die Schmiegung, bei kleineren Materialhärten und gleichzeitig vergleichweise kleinen Abmessungen eine hohe Belastbarkeit und große Tragzahlen erreicht.

## Patentansprüche

1. Linearkugellager, umfassend folgende Merkmale:
- Ein Innenteil und ein Außenteil, die über wenigstens zwei Reihen von Kugeln (20, 25 ,70) gegeneinander längsverschieblich sind,
- wenigstens eine der einander zum Gegenüberliegen vorgesehenen Mantelflächen der Teile ist wenigstens in einem sektorartigen Bereich größer 180° kreiszylindermantelartig ausgebildet,
- die Kugeln (20, 25, 70) wenigstens einer Reihe sind an einem der Teile in einer Rille (7, 57) und im anderen Teil in einer Führung angeordnet,
- im Bereich der Rille (7, 57) ist das Teil mit einer Härte kleiner in etwa 54 HRC ausgebildet, und
- eine Schmiegung zwischen den Kugeln (20, 25, 70) und der Rille (7, 57) mit besagter Härte beträgt in etwa 0,51 bis 0,65.

2. Linearkugellager nach Anspruch 1, wobei die Härte kleiner in etwa 45 HRC ist.

3. Linearkugellager nach einem der Ansprüche 1 oder 2, wobei der Bereich größer 270° ist.

4. Linearkugellager nach einem der Ansprüche 1 bis 3, wobei die vollständige Mantelfläche kreiszylinderförmig ausgebildet ist.

5. Linearkugellager nach einem der Ansprüche 1 bis 4, wobei die Rille (7, 57) frei von einer Laufbahneinlage ausgebildet ist.

6. Linearkugellager nach einem der Ansprüche 1 bis 5, wobei das Teil mit der Rille (7, 57) wenigstens im Bereich der Rille (7, 57) aus einem ungehärteten und/oder wärmeunbehandelten Stahl oder Aluminium ausgebildet ist.

7. Linearkugellager nach einem der Ansprüche 1 bis 6, wobei das Innenteil mit der Rille (7, 57) ausgebildet ist.

8. Linearkugellager nach einem der Ansprüche 1 bis 7, wobei die Führung wenigstens teilweise mit einer Härte größer 54 HRC ausgebildet ist.

9. Linearkugellager nach einem der Ansprüche 1 bis 7, wobei die Führung ebenfalls als Rille mit besagter Härte ausgebildet ist.

10. Linearkugellager nach einem der Ansprüche 1 bis 9, wobei wenigstens in einem Bereich, in dem das Innen- und das Außenteil gegeneinander längsverschieblich sind, das Innenteil mit einem kreiszylinderartigen Außenmantel und das Außenteil mit einem kreiszylinderartigen Innenmantel ausgebildet sind, und das Außenteil insbesondere eine Käfighülse (10, 60) umfasst.

11. Linearkugellager nach einem der Ansprüche 1 bis 10, wobei die Führung ein Laufbahnplattenelement (12, 14) umfasst, und das Laufbahnplattenelement (12, 14) insbesondere in die Käfighülse (10) einsetzbar ist.

12. Linearkugellager nach einem der Ansprüche 1 bis 11, wobei das Innenteil als eine Vollwelle (5), Hohlwelle oder hülsenartig (50) ausgebildet ist.

13. Linearkugellager nach einem der Ansprüche 1 bis 12, wobei die beiden Teile Mittel zum Begrenzen des Längsverschiebens der beiden Teile gegeneinander umfassen, die Mittel insbesondere wenigstens einen radialen an einem der Teile ausgebildeten Fortsatz umfassen, der in eine am anderen Teil in Längsverschieberichtung sich länglich erstreckende Ausnehmung (62) hineinragend ausgebildet ist, und der Fortsatz insbesondere am Innenteil als ein Zapfen (52) und die Ausnehmung (62) am als Käfighülse (60) ausgebildeten Außenteil ausgebildet ist.

14. Linearkugellager nach einem der Ansprüche 1 bis 13, wobei das Linearkugellager für wenigstens eine der Reihen von Kugeln (20, 25, 70) mit einem endlosen Kugelumlauf oder als ein Changierlager ausgebildet ist.

## Claims

1. Linear ball bearing, comprising the following features:
- an inner part and an outer part which are longitudinally displaceable with respect to one another via at least two rows of balls (20, 25, 70),
- at least one of the surface areas of the parts, the said surface areas being intended to lie opposite one another, is formed, at least in a sector-like region greater than 180°, in a manner of an envelope of a circular cylinder,
- the balls (20, 25, 70) of at least one row are arranged on one of the parts in a groove (7, 57) and in the other part in a guide,
- in the region of the groove (7, 57) the part is formed with a hardness lower than about 54 HRC, and
- osculation between the balls (20, 25, 70) and the groove (7, 57) having the said hardness amounts to about 0.51 to 0.65.

2. Linear ball bearing according to Claim 1, the hardness being lower than about 45 HRC.

3. Linear ball bearing according to either one of Claims 1 and 2, the region being greater than 270°.

4. Linear ball bearing according to one of Claims 1 to 3, the complete surface area being of circular-cylindrical form.

5. Linear ball bearing according to one of Claims 1 to 4, the groove (7, 57) being formed free of a raceway lining.

6. Linear ball bearing according to one of Claims 1 to 5, the part with the groove (7, 57) being formed, at least in the region of the groove (7, 57), from an unhardened and/or heat-untreated steel or aluminium.

7. Linear ball bearing according to one of Claims 1 to 6, the inner part being formed with the groove (7, 57).

8. Linear ball bearing according to one of Claims 1 to 7, the guide being formed at least in part with a hardness greater than 54 HRC.

9. Linear ball bearing according to one of Claims 1 to 7, the guide likewise being formed as a groove with the said hardness.

10. Linear ball bearing according to one of Claims 1 to 9, at least in a region in which the inner and the outer part are longitudinally displaceable with respect to one another the inner part being formed with a circular-cylinder-like outer surface and the outer part being formed with a circular-cylinder-like inner surface, and the outer part comprising, in particular, a cage sleeve (10, 60).

11. Linear ball bearing according to one of Claims 1 to 10, the guide comprising a raceway plate element (12, 14), and the raceway plate element (12, 14) being insertable, in particular, into the cage sleeve (10).

12. Linear ball bearing according to one of Claims 1 to 11, the inner part being formed as a solid shaft (5) or hollow shaft or being of sleeve-like (50) form.

13. Linear ball bearing according to one of Claims 1 to 12, the two parts comprising means for limiting the longitudinal displacement of the two parts with respect to one another, the means comprising, in particular, at least one radial extension which is formed on one of the parts and which is designed to project into a recess (62) extending longitudinally in the longitudinal displacement direction on the other part, and the extension being formed, in particular on the inner part, as a tenon (52) and the recess (62) being formed on the outer part designed as a cage sleeve (60).

14. Linear ball bearing according to one of Claims 1 to 13, the linear ball bearing being designed for at least one of the rows of balls (20, 25, 70) with endless ball circulation or as a traversing bearing.

## Revendications

1. Roulement à billes linéaire comprenant les caractéristiques suivantes :
- une partie intérieure et une partie extérieure, qui peuvent être déplacées longitudinalement l'une par rapport à l'autre par le biais d'au moins deux rangées de billes (20, 25, 70),
- au moins l'une des surfaces d'enveloppe des parties prévues pour se faire face est réalisée en forme d'enveloppe cylindrique circulaire au moins dans une région en forme de secteur supérieure à 180°,
- les billes (20, 25, 70) d'au moins une rangée sont disposées, au niveau de l'une des parties, dans une gorge (7, 57) et dans l'autre partie, dans un guide,
- dans la région de la gorge (7, 57), la partie est réalisée avec une dureté inférieure à environ 54 HRC, et
- un rapport du rayon de la piste de roulement à la bille entre les billes (20, 25, 70) et la gorge (7, 57) ayant ladite dureté vaut approximativement 0,51 à 0,65.

2. Roulement à billes linéaire selon la revendication 1, dans lequel la dureté est inférieure à environ 45 HRC.

3. Roulement à billes linéaire selon l'une quelconque des revendications 1 ou 2, dans lequel la région est supérieure à 270°.

4. Roulement à billes linéaire selon l'une quelconque des revendications 1 à 3, dans lequel la surface d'enveloppe complète est réalisée sous forme cylindrique circulaire.

5. Roulement à billes linéaire selon l'une quelconque des revendications 1 à 4, dans lequel la gorge (7, 57) est réalisée de manière exempte d'un insert de piste de roulement.

6. Roulement à billes linéaire selon l'une quelconque des revendications 1 à 5, dans lequel la partie avec la gorge (7, 57) est réalisée au moins dans la région de la gorge (7, 57) en un acier ou un aluminium non trempé et/ou non soumis à traitement thermique.

7. Roulement à billes linéaire selon l'une quelconque des revendications 1 à 6, dans lequel la partie intérieure est réalisée avec la gorge (7, 57).

8. Roulement à billes linéaire selon l'une quelconque des revendications 1 à 7, dans lequel le guide est réalisé au moins en partie avec une dureté supérieure à 54 HRC.

9. Roulement à billes linéaire selon l'une quelconque des revendications 1 à 7, dans lequel le guide est également réalisé sous forme de gorge ayant ladite dureté.

10. Roulement à billes linéaire selon l'une quelconque des revendications 1 à 9, dans lequel au moins dans une région dans laquelle la partie intérieure et la partie extérieure peuvent être déplacées longitudinalement l'une par rapport à l'autre, la partie intérieure est réalisée avec une enveloppe extérieure de type cylindrique circulaire et la partie extérieure est réalisée avec une enveloppe intérieure de type cylindrique circulaire, et la partie extérieure comprend notamment un manchon de cage (10, 60).

11. Roulement à billes linéaire selon l'une quelconque des revendications 1 à 10, dans lequel le guide comprend un élément de plaque de piste de roulement (12, 14), et l'élément de plaque de piste de roulement (12, 14) peut être inséré notamment dans le manchon de cage (10).

12. Roulement à billes linéaire selon l'une quelconque des revendications 1 à 11, dans lequel la partie intérieure est réalisée sous forme d'arbre plein (5), d'arbre creux, ou sous forme de manchon (50).

13. Roulement à billes linéaire selon l'une quelconque des revendications 1 à 12, dans lequel les deux parties comprennent des moyens pour limiter le déplacement longitudinal des deux parties l'une par rapport à l'autre, les moyens comprennent notamment au moins une saillie radiale réalisée sur l'une des parties, laquelle saillie est réalisée de manière à pénétrer dans un évidement (62) s'étendant longitudinalement sur l'autre partie dans la direction de déplacement longitudinale, et la saillie est réalisée notamment sur la partie intérieure en tant que tourillon (52) et l'évidement (62) est réalisé sur la partie extérieure réalisée sous forme de manchon de cage (60).

14. Roulement à billes linéaire selon l'une quelconque des revendications 1 à 13, dans lequel le roulement à billes linéaire est réalisé pour au moins l'une des rangées de billes (20, 25, 70) avec une circulation de billes sans fin ou sous forme de roulement pour mouvements combinés.
